# FASCICULE DE BREVET EUROPEEN

(11) **EP 3 609 753 B1**
(45) Date de publication et mention de la délivrance du brevet: **01.09.2021**
(21) Numéro de dépôt: 18718411.4
(22) Date de dépôt: 09.04.2018
(51) Int. Cl.: B60T 13/66, B60T 13/68, B60T 15/18, B60T 15/02, B60T 15/04

(54) **ROBINET DE MÉCANICIEN SIMPLIFIÉ ET CIRCUIT PNEUMATIQUE DE FREINAGE D'UNE RAME FERROVIAIRE INCORPORANT UN TEL ROBINET DE MÉCANICIEN**
VEREINFACHTES FÜHRERBREMSVENTIL UND PNEUMATISCHER BREMSKREIS EINES SCHIENENFAHRZEUGS MIT EINEM SOLCHEN FÜHRERBREMSVENTIL
SIMPLIFIED DRIVERS VALVE AND PNEUMATIC BRAKING CIRCUIT FOR A RAIL VEHICLE INCLUDING SUCH A DRIVERS VALVE

(30) Priorité: 10.04.2017 FR 1753090
(43) Date de publication de la demande: 19.02.2020
(73) Titulaire: Matisa Matériel Industriel SA, 1023 Crissier (CH)
(72) Inventeur: GANZ, Jörg, 1163 Etoy (CH)
(74) Mandataire: Alatis
(86) Numéro de dépôt international: PCT/EP2018/059036
(87) Numéro de publication internationale: WO 2018/189115

(56) Documents cités:
- EP-A2- 0 321 987
- EP-A2- 0 496 058

## Description

### DOMAINE TECHNIQUE DE L'INVENTION

L'invention se rapporte à un robinet de mécanicien, et notamment à un robinet de mécanicien simplifié. On désigne par robinet de mécanicien un organe de commande pneumatique ou électropneumatique qui permet de faire varier la pression d'une conduite de frein qui alimente les freins pneumatique d'un véhicule ferroviaire. Pour les trains et rames automotrices de faibles longueurs, comportant un nombre de véhicules réduit, un nombre d'essieux réduit, et présentant une longueur réduite, la commande pneumatique peut être de conception simplifiée, et l'on parle alors de robinet de mécanicien simplifié.

### ÉTAT DE LA TECHNIQUE ANTÉRIEURE

On connaît des commandes de freinage simplifiées, dites robinets de mécanicien simplifiés, assurant le pilotage de la pression pneumatique dans une conduite générale d'alimentation pneumatique des freins de service. Typiquement, un tel robinet de mécanicien doit assurer une position de serrage du frein de service par abaissement de la pression dans la conduite générale, une position de desserrage par augmentation de la pression dans la conduite générale, et la possibilité de moduler la pression dans la conduite générale pour moduler le freinage.

Mais il est difficile avec un robinet de mécanicien simplifié selon l'état de la technique, d'assurer à la fois un débit important de remplissage et de vidange de la conduite générale des freins, nécessaire pour obtenir un temps de réponse satisfaisant, et un réglage fin de la pression dans la conduite générale. En particulier, il est particulièrement difficile de réaliser une fonction de préserrage, c'est-à-dire de passage de la pression de desserrage à un palier de pression stabilisée de serrage partiel prédéterminer, en réponse à un ordre initial de serrage.

Dans le document EP 0 496 058 A2 est décrit un robinet de mécanicien selon le préambule de la revendication 1.

### EXPOSÉ DE L'INVENTION

L'invention vise à remédier aux inconvénients de l'état de la technique et à proposer une commande pneumatique combinant une grande capacité de débit et une capacité de réglage fin des paliers de remplissage et de vidange.

Pour ce faire est proposé, selon un premier aspect de l'invention, un robinet de mécanicien pour commander un circuit pneumatique de freinage d'une rame d'un ou plusieurs véhicules ferroviaires, le circuit pneumatique de freinage comportant une conduite d'alimentation, une conduite générale de frein pour distribuer une pression à un ou plusieurs mécanismes de freins pneumatiques, le robinet de mécanicien comportant :
- une vanne pneumatique de relais comportant un volume d'admission destiné à être raccordé à la conduite d'alimentation, un volume d'échappement destiné à être raccordé à la conduite générale de frein, un orifice de purge et un volume de pilotage, la vanne pneumatique de relais étant apte, en présence d'une différence positive suffisante entre une pression de pilotage régnant dans le volume de pilotage et une pression d'échappement régnant dans le volume d'échappement, à ouvrir un passage entre le volume d'admission et le volume d'échappement, et étant apte à ouvrir un passage entre le volume d'échappement et l'orifice de purge au moins lorsque le volume de pilotage est à la pression atmosphérique ; et
- un étage de pilotage électropneumatique pour faire varier la pression de pilotage, comportant un ensemble d'une ou plusieurs électrovannes, apte à relier le volume de pilotage alternativement à une source de pression et à un orifice de vidange, et une commande de déclenchement d'un palier initial de serrage, comportant un pressostat relié au volume de pilotage, et un circuit logique relié au pressostat et à l'ensemble d'une ou plusieurs électrovannes, et apte, en réponse à un ordre de desserrage, à générer à destination de l'ensemble d'une ou plusieurs électrovannes une commande électrique de vidange partielle du volume de pilotage jusqu'à détection par le pressostat du franchissement d'un seuil prédéterminé de pression, puis à réguler le volume de pilotage au seuil prédéterminé de pression.

La vanne pneumatique de relais confère au robinet de mécanicien une grande capacité, et l'étage de pilotage permet le réglage fin recherché des paliers de remplissage et de vidange.

La commande de déclenchement d'un palier initial de serrage assure, au niveau de l'étage de pilotage électropneumatique, une fonction de préserrage. Le palier initial de serrage est défini par l'utilisateur, et peut être conforme à des dispositions normatives. En pratique, pour une pression nominale de desserrage de 5 bars dans la conduite générale de frein, le palier initial de serrage sera par exemple fixé à 4,6 bars. En pilotant le palier initial de serrage au niveau de l'étage de pilotage électropneumatique, on assure un temps de réponse largement indépendant du volume de la conduite générale de frein, du nombre d'essieux et de la longueur du train.

Étant rappelé que pour des raisons de sécurité, les freins du véhicule ferroviaire sont serrés en l'absence de pression dans la conduite générale de frein, il convient de purger la conduite générale de frein également en l'absence de pression dans le volume de pilotage.

En pratique, la vanne pneumatique de relais sera dimensionnée pour minimiser la perte de charge dans les conditions de remplissage. En particulier, la section de passage nominale (maximale) entre le volume d'admission et le volume d'échappement et la section de passage nominale (maximale) entre le volume d'échappement et l'orifice de purge seront dimensionnées en fonction du diamètre de la conduite d'alimentation et de la conduite générale de frein pour minimiser les pertes de charge.

De préférence, la vanne pneumatique de relais est apte à maintenir le volume d'échappement isolé du volume d'admission et de l'orifice de purge lorsque la différence entre la pression de pilotage et la pression d'échappement est supérieure à un seuil positif donné de purge et inférieure à un seuil positif donné de remplissage. La plage de fonctionnement ainsi définie correspond à un état neutre de la vanne pneumatique de relais, qui permet de stabiliser la commande de la vanne pneumatique de relais. Toutefois, on aura intérêt à ce que la plage de fonctionnement correspondant à cette position intermédiaire d'isolement soit relativement faible, de sorte que le temps de réponse de la vanne pneumatique de relais soit faible. Le seuil positif de purge est de préférence nul ou proche de zéro : dès que le volume de pilotage est en dépression par rapport au volume d'échappement, cette dernière est purgée.

Suivant un mode de réalisation particulièrement avantageux, l'ensemble d'une ou plusieurs électrovannes a un état normalement ouvert reliant le volume de pilotage à l'orifice de vidange en l'absence d'alimentation électrique. Une défaillance électrique de l'étage de pilotage électropneumatique se traduit ainsi par la vidange du volume de pilotage, qui entraîne elle-même la purge du volume d'échappement, donc le serrage des freins.

En pratique, on peut notamment prévoir que l'ensemble d'une ou plusieurs électrovannes comporte une électrovanne de vidange apte à relier le volume de pilotage à l'orifice de vidange, de préférence par l'intermédiaire d'un étranglement. De préférence, l'électrovanne de vidange est une électrovanne en tout ou rien. On évite ainsi le recours à une électrovanne proportionnelle. De préférence, l'électrovanne de vidange est normalement ouverte dans une position reliant le volume de pilotage à l'orifice de vidange en l'absence d'alimentation électrique.

Par ailleurs, on peut prévoir que l'ensemble d'une ou plusieurs électrovannes comporte une électrovanne de remplissage apte à relier la source de pression au volume de pilotage, de préférence par l'intermédiaire d'un étranglement. Le cas échéant, on peut prévoir un réducteur de pression branché en série entre le volume d'admission et l'électrovanne de remplissage, pour assurer que la pression maximale dans le circuit de pilotage ne dépassera pas une valeur nominale donnée, par exemple 5 bars. De préférence, l'électrovanne de remplissage est une électrovanne en tout ou rien. On évite ainsi le recours à une électrovanne proportionnelle. De préférence, l'électrovanne de remplissage est normalement fermée dans une position isolant le volume de pilotage de la source de pression en l'absence d'alimentation électrique.

Suivant un mode de réalisation préféré, l'électrovanne de vidange est branchée en série entre l'électrovanne de remplissage et le volume de pilotage, pour relier le volume de pilotage alternativement à l'électrovanne de remplissage ou à l'orifice de vidange. En pratique, l'étage de pilotage électropneumatique comporte en outre un circuit électrique de pilotage apte d'une part, en réponse à un signal électrique de desserrage des freins, à positionner l'électrovanne de vidange dans une position reliant le volume de pilotage à l'électrovanne de remplissage et à positionner l'électrovanne de remplissage dans une position de remplissage reliant le volume de pilotage à la source de pression par l'intermédiaire de l'électrovanne de vidange et d'autre part, en présence d'un signal électrique de serrage des freins, à positionner l'électrovanne de vidange dans une position de vidange reliant le volume de pilotage à l'orifice de vidange et à positionner l'électrovanne de remplissage dans une position isolant l'électrovanne de vidange de la source de pression.

Suivant un mode de réalisation, l'étage de pilotage électropneumatique comporte une soupape de vidange apte à vidanger le volume de pilotage en présence d'une différence de pression supérieure à un seuil positif donné entre le volume de pilotage et le volume d'échappement. Cette soupape de vidange devient active notamment en cas de fuite importante sur le circuit de freinage principal, par exemple dans la conduite générale de frein, ou lorsqu'un dispositif de freinage d'urgence a été appliqué et à provoquer une vidange de la conduite générale de frein. Son rôle, dans de telles circonstances, est d'éviter que la vanne pneumatique de relais provoque un remplissage de la conduite générale de frein.

De préférence, le robinet de mécanicien comporte en outre un réservoir de pilotage relié au volume de pilotage, et ayant une capacité de préférence inférieure à 10 litres, de préférence inférieure à 4 litres, et de préférence supérieure à 1 litre. Le réservoir de pilotage constitue un volume tampon qui permet d'obtenir la finesse de réglage recherchée.

De préférence, la vanne pneumatique de relais est apte, en présence d'une différence positive suffisante entre une pression de pilotage régnant dans le volume de pilotage et une pression d'échappement régnant dans le volume d'échappement, à ouvrir le passage entre le volume d'admission et le volume d'échappement avec une section de passage fonction de la pression de pilotage et de la pression d'échappement. Le caractère proportionnel de la vanne pneumatique de relais permet un fonctionnement particulièrement stable.

Suivant un autre aspect de l'invention, celle-ci a trait à un circuit pneumatique de freinage d'une rame d'un ou plusieurs véhicules ferroviaires, comportant une conduite d'alimentation reliée à un générateur de pression, une conduite générale de frein pour distribuer une pression à un ou plusieurs mécanismes de freins pneumatiques, et un robinet de mécanicien tel que décrit précédemment.

### BRÈVE DESCRIPTION DES FIGURES

D'autres caractéristiques et avantages de l'invention ressortiront à la lecture de la description qui suit, en référence aux figures annexées, qui illustrent :
- la figure 1, circuit pneumatique de freinage d'une rame ferroviaire, comportant un robinet de mécanicien selon un mode de réalisation de l'invention ;
- la figure 2, le robinet de mécanicien du circuit pneumatique de freinage de la figure 1.

Pour plus de clarté, les éléments identiques ou similaires sont repérés par des signes de référence identiques sur l'ensemble des figures.

### DESCRIPTION DÉTAILLÉE DE MODES DE RÉALISATION

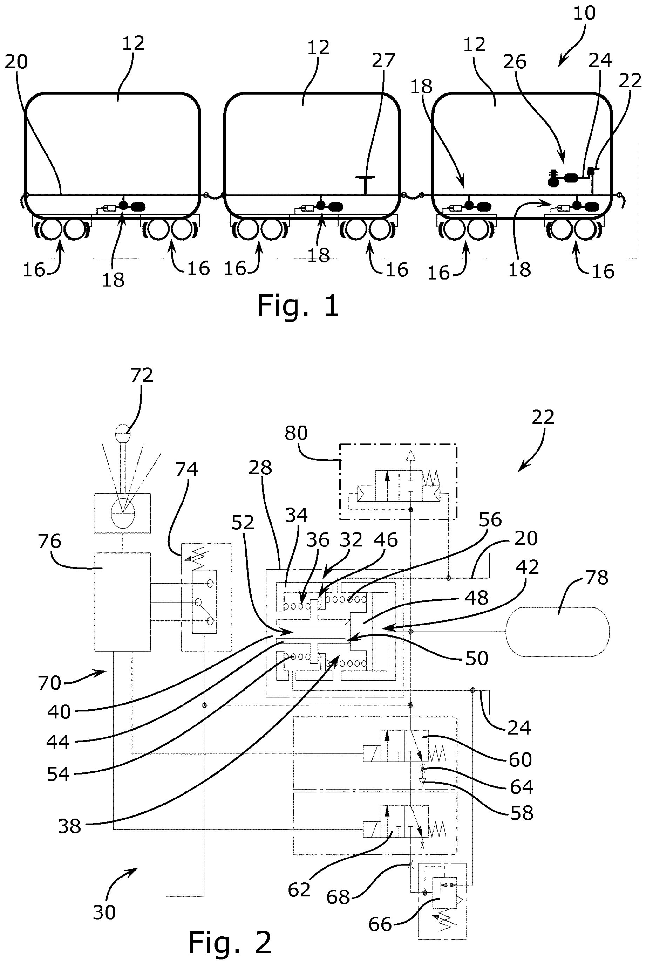

Sur la figure 1 est illustrée une rame ferroviaire 10, comportant dans cet exemple plusieurs véhicules 12, supportés chacun par un ou plusieurs trains de roues **16,** dont certains au moins, et de préférence au moins un par véhicule **12,** sont équipés de freins pneumatiques **18.** Une conduite générale de frein **20** parcourt l'ensemble de la rame **10** et relie les freins pneumatiques **18** répartis dans les différents véhicules **12** à un robinet de mécanicien **22,** lui-même relié par une conduite d'alimentation **24** à un groupe de production d'air comprimé **26** embarqué dans un des véhicules **12** de la rame **10.** Les freins pneumatiques **18** sont calibrés de manière à être complètement serrés lorsque la pression dans la conduite générale de frein est inférieure à une pression prédéterminée, par exemple 3,5 bars, et à être complètement desserrés lorsque la pression dépasse un seuil de desserrage total, par exemple de 4,75 bars, la pression nominale dans la conduite générale de frein **20** étant par exemple fixée à 5 bars. La pression délivrée par le groupe de production d'air comprimé **26** est, dans les conditions nominales de fonctionnement, toujours supérieure à la pression nominale dans la conduite générale de frein **20.**

Le robinet de mécanicien **22,** illustré en détail sur la figure **2****,** permet de faire varier la pression de la conduite générale de frein **20** en fonction d'un ordre reçu et comporte à cet effet un étage de puissance pneumatique **28** piloté par un étage de pilotage électropneumatique **30.**

L'étage de puissance pneumatique **28** est ici constitué par une vanne pneumatique de relais **32** à commande pneumatique comportant un corps **34** délimitant un volume d'admission **36** raccordé à la conduite d'alimentation **24,** un volume d'échappement **38** raccordé à la conduite générale de frein **20,** un orifice de purge **40** et un volume de pilotage **42.** Un tiroir **44** sépare le volume d'admission **36** du volume d'échappement **38** lorsqu'il repose sur un siège de soupape de remplissage **46** formé sur le corps **34** de la vanne pneumatique de relais **32.** Un piston de pilotage **48** sépare de manière étanche le volume de pilotage **42** du volume d'échappement **38** et forme un siège de soupape de purge **50** sur lequel vient en appui une extrémité d'une partie centrale tubulaire **52** du tiroir **44,** qui débouche au niveau de l'orifice de purge **40.** Un ressort de compression **54** rappelle le tiroir **44** sur le siège de soupape de remplissage 46, alors qu'un ressort de pilotage **56** tend à éloigner le piston de pilotage **48** et le siège de soupape de purge **50** de l'extrémité du tiroir **44,** de manière à maintenir ouverte la liaison entre le volume d'échappement **38** et l'orifice de purge **40.**

En pratique, le ressort de pilotage **56** est plus faible que le ressort de compression **54.** Il peut être le cas échéant omis. Il peut prendre appui soit sur le corps **34** de la vanne pneumatique de relais **32,** soit sur le tiroir **44.** Par ailleurs, le tiroir **44** n'a pas d'effet de piston différentiel, au sens où il est conformé de manière que la pression dans le volume d'admission **36** et la pression dans le volume d'échappement n'exercent pas d'effort résultant dans le sens de déplacement du tiroir.

Au repos, le volume de pilotage **56** est vidangé. Le ressort de compression **54** maintient le tiroir **44** en appui contre le siège de soupape de remplissage **46.** Le ressort de pilotage **56** maintient le siège de soupape de purge **50,** porté par le piston de pilotage **48,** à distance de l'extrémité du tiroir **44,** de sorte que le volume d'échappement **38** et la conduite générale de frein **20** sont à la pression atmosphérique. Les freins pneumatiques **18** sont par conséquent serrés.

Lorsqu'une pression est appliquée au volume de pilotage **42,** le piston de pilotage **48** se déplace avec le siège de soupape de purge **50** qui vient en appui contre l'extrémité du tiroir **44** pour isoler le volume d'échappement **38** et la conduite générale de frein **20.** Si la pression dans le volume de pilotage **42** est supérieure à un seuil de remplissage déterminé par le ressort de compression **54** et accessoirement par le ressort de pilotage **56,** le piston de pilotage **48** sépare le tiroir **44** du siège de soupape de remplissage, permettant à l'air comprimé de la conduite d'alimentation **24** de s'écouler, au travers du volume d'admission **36** et du volume d'échappement **38,** dans la conduite générale de frein **20,** pour alimenter la conduite générale **20** et desserrer les freins pneumatiques **18.** La pression dans le volume d'échappement **38** augmente et vient s'appliquer sur le piston de pilotage **48,** dont la position varie en fonction de la pression d'échappement régnant dans le volume d'échappement **38,** de la pression de pilotage régnant dans le volume de pilotage **42** et des efforts appliqués par le ressort de compression **54** et accessoirement par le ressort de pilotage **56.** Lorsque la pression d'échappement est suffisante, le piston de pilotage **42** est repoussé, le tiroir **44** vient en appui sur le siège de soupape de remplissage et isole le volume d'échappement **38.** Un équilibre s'établit entre la pression d'échappement et la pression de pilotage, sans que l'extrémité du tiroir **44** se sépare du siège de soupape de purge **50.**

Si à partir de cette position l'on diminue la pression de pilotage pour atteindre un palier intermédiaire, le piston de pilotage **48** reprend sa course et le siège de soupape de purge **50** se sépare du tiroir **44,** ce qui provoque une diminution de la pression dans la conduite générale de frein **20** reliée au volume d'échappement **38.** Dès qu'un nouvel équilibre de part et d'autre du piston de pilotage **48** est atteint, le siège de soupape de purge **50** revient en appui contre l'extrémité du tiroir **44** et isole de nouveau le volume d'échappement **38** et la conduite générale de frein **20,** qui se trouve à un palier intermédiaire de pression défini par la pression de pilotage.

Inversement, si l'on augmente la pression de pilotage pour atteindre un palier intermédiaire, le piston de pilotage **48** se déplace et repousse le tiroir **44** qui ouvre le passage entre le volume d'admission **36** et le volume d'échappement **38,** permettant un remplissage supplémentaire de la conduite générale de frein **20** et une augmentation de la pression dans le volume d'échappement **38,** qui repousse le piston de pilotage **48.** Le tiroir **44** revient en appui sur le siège de soupape de remplissage **46** et isole le volume d'échappement **38.** Un nouvel équilibre s'établit entre la pression d'échappement et la pression de pilotage.

Naturellement, si l'on purge complètement le volume de pilotage **42,** le passage entre le tiroir **44** et le siège de soupape de purge **50** est maintenu ouvert par le ressort de pilotage **56,** ce qui provoque une vidange complète de la conduite générale de frein **20,** et l'application complète des freins pneumatiques **18.**

La force de rappel du ressort de compression **36** étant proportionnelle à son écrasement, la position du tiroir **44** et la section de passage entre le tiroir **44** et le siège de soupape de remplissage **46** sont des fonctions de la pression de pilotage régnant dans le volume de pilotage **42** et de la pression d'échappement régnant dans le volume d'échappement et dans la conduite générale de frein. Dans la plage d'ouverture du passage entre le tiroir **44** et le siège de soupape de remplissage **46,** la section de passage entre le tiroir **44** et le siège de soupape de remplissage **46** est une fonction monotone croissante de la différence de pression entre la pression de pilotage et la pression d'échappement. La vanne pneumatique de relais **32** est dimensionnée de manière à ce que lorsque la section de passage entre le tiroir **44** et le siège de soupape de remplissage **46** est maximale, la perte de charge constituée par la vanne pneumatique de relais **32** soit faible.

De même, la force de rappel du ressort de pilotage 56 étant proportionnelle à son écrasement, la position du piston de pilotage 48 avant son entrée en contact avec le tiroir **44** est une fonction de la différence de pression entre le volume de pilotage **42** et le volume d'échappement **38,** qui est ici à la pression atmosphérique. La section de passage entre le siège de soupape de purge **50** et le tiroir **44** est une fonction monotone décroissante de la différence entre la pression de pilotage et la pression atmosphérique. La vanne pneumatique de relais **32** est dimensionnée de manière à ce que lorsque la section de passage entre le tiroir **44** et le siège de soupape de purge **50** est maximale, donc lorsque le volume de pilotage est à la pression atmosphérique, la perte de charge constituée par la vanne pneumatique de relais **32** entre la conduite générale de frein **20** et l'orifice de purge **40** soit faible.

L'étage de pilotage électropneumatique **30,** destiné à faire varier finement la pression de pilotage dans le volume de pilotage **42,** comporte un ensemble d'électrovannes destinées à relier le volume de pilotage **42** alternativement à la conduite d'alimentation **24** reliée au volume d'admission **36,** et à un orifice de vidange **58.** Cet ensemble est ici constitué d'une électrovanne de vidange **60** et d'une électrovanne de remplissage **62** branchées en série entre le volume de pilotage **42** et la conduite d'alimentation **24** reliée au volume d'admission **36,** l'électrovanne de vidange **60** étant branchée entre l'électrovanne de remplissage **62** et le volume de pilotage **42.** L'électrovanne de vidange **60** est une électrovanne en tout ou rien normalement ouverte, au sens où, en l'absence d'alimentation électrique, elle se trouve dans une position reliant le volume de pilotage **42** à l'orifice de vidange **58.** Elle est pourvue d'un étranglement **64** qui permet de lisser et finement contrôler la diminution de la pression de pilotage lors des opérations de vidange du volume de pilotage **42.** L'électrovanne de remplissage **62** est une électrovanne en tout ou rien, normalement fermée au sens où, en l'absence d'alimentation électrique, elle se place dans une position isolant le volume de pilotage **42** du volume d'admission **36** et de la conduite de remplissage **24.** Un réducteur de pression **66** est interposé entre la vanne de remplissage **60** et la conduite de remplissage **24,** pour définir une pression de pilotage nominale correspondant à la pression nominale souhaitée dans la conduite générale de frein **20.** En outre, un étranglement **68** est prévu pour lisser et finement contrôler l'augmentation de la pression de pilotage lors des opérations de remplissage du volume de pilotage **42.**

L'électrovanne de vidange **60** et l'électrovanne de remplissage **62** sont connectées électriquement à un circuit électrique de pilotage **70** qui les active simultanément ou séquentiellement de façon à augmenter ou diminuer la pression dans le volume de pilotage **42,** ou à isoler le volume de pilotage **42,** en vue de répondre à un ordre communiqué par une manette **72** ou un automatisme.

En présence d'un ordre de desserrage des freins, le circuit électrique de pilotage **70** alimente les électrovannes **60, 62** de manière à fermer l'électrovanne de vidange **60** pour relier le volume de pilotage **42** à l'électrovanne de remplissage **62** et à ouvrir l'électrovanne de remplissage **62** pour relier le volume de pilotage **42** à la conduite d'alimentation **24** par l'intermédiaire de l'électrovanne de vidange **60** et de l'étranglement **68.**

En présence d'un ordre de serrage, les électrovannes **60, 62** ne sont pas alimentées et trouvent leur position par défaut, de sorte que l'électrovanne de vidange **60** s'ouvre dans une position de vidange reliant le volume de pilotage **42** à l'orifice de vidange **58** par l'intermédiaire de l'étranglement **58,** et que l'électrovanne de remplissage **62** se ferme dans de manière à isoler l'électrovanne de vidange **60** de la conduite d'alimentation **24.**

Pour isoler le volume de pilotage **42,** le circuit électrique de pilotage **70** provoque la fermeture de l'électrovanne de vidange **60** et maintient fermée l'électrovanne de remplissage **62.**

De façon optionnelle, le circuit électrique de pilotage **70** peut comporter en outre une commande de déclenchement d'un palier initial de serrage, comportant un pressostat **74** détectant un seuil de pression dans le volume de pilotage **42** et un circuit logique **76** qui, en réponse à un ordre initial de serrage des freins, fait diminuer la pression de pilotage comme décrit précédemment depuis la pression de pilotage nominale jusqu'à ce que le pressostat **74** détecte un franchissement de seuil, par exemple de **0,4** bars en dessous de la pression de pilotage nominale, correspondant à un premier palier de serrage des freins. Une fois atteint ce seuil, le circuit logique **76** pilote les électrovannes **60, 62** pour maintenir la pression de pilotage au seuil.

Pour stabiliser l'étage de pilotage **30,** un réservoir tampon de pilotage **78** est relié au volume de pilotage **42.** Ce réservoir de pilotage **78** a de préférence une faible capacité, de l'ordre d'un litre, et peut le cas échéant être incorporé dans le corps **34** de la vanne pneumatique de relais **32.**

De façon optionnelle, l'étage de pilotage électropneumatique **30** comporte une soupape de vidange **80** à commande pneumatique apte à vidanger le volume de pilotage **42** en présence d'une différence de pression supérieure à un seuil positif donné entre le volume de pilotage **42** et le volume d'échappement **38.** Cette soupape de vidange **80** permet de commander l'étage de pilotage **30** dans des circonstances exceptionnelles, par exemple en cas de fuite importante dans la conduite générale de frein **20,** ou en cas de déclenchement d'un frein d'urgence indépendant du robinet de mécanicien **22** et ayant pour effet de vidanger la conduite générale de frein **20.**

Naturellement, les exemples représentés sur les figures et discutés ci-dessus ne sont donnés qu'à titre illustratif et non limitatif. Les deux électrovannes peuvent être remplacées par une électrovanne unique en tout ou rien ou tout autre ensemble d'électrovannes d'effet équivalent.

La vanne pneumatique de relais a été illustrée de façon schématique pour les besoins de la description. Une telle vanne est connue en soi et disponible sur le marché (par exemple référence commerciale Knorr Bremse « Valve de relais **KR-5** ») pour d'autres applications.

Bien que l'on ait décrit une source de pression commune pour l'étage de puissance **28** et l'étage de pilotage 30, à savoir la conduite d'alimentation **24,** on peut très bien envisager une source de pression distincte pour chaque étage.

L'utilisation du robinet de mécanicien et du circuit de freinage l'incorporant n'est pas limitée à la configuration de rame illustrée sur la figure 1, mais est au contraire envisagée pour d'autres types de rames, à un ou plusieurs véhicules, tractés par une locomotive ou automoteurs, articulées ou non.

Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Robinet de mécanicien (22) pour commander un circuit pneumatique de freinage d'une rame (10) d'un ou plusieurs véhicules ferroviaire (12), le circuit pneumatique de freinage comportant une conduite d'alimentation (24), une conduite générale de frein (20) pour distribuer une pression à un ou plusieurs mécanismes de freins pneumatiques (18), le robinet de mécanicien (22) comportant :
- une vanne pneumatique de relais (32) comportant un volume d'admission (36) destiné à être raccordé à la conduite d'alimentation (24), un volume d'échappement (38) destiné à être raccordé à la conduite générale de frein (20), un orifice de purge (40) et un volume de pilotage (42), la vanne pneumatique de relais (32) étant apte, en présence d'une différence positive suffisante entre une pression de pilotage régnant dans le volume de pilotage (42) et une pression d'échappement régnant dans le volume d'échappement (38), à ouvrir un passage entre le volume d'admission (36) et le volume d'échappement (38), et étant apte à ouvrir un passage entre le volume d'échappement (38) et l'orifice de purge (40) au moins lorsque le volume de pilotage (42) est à la pression atmosphérique ; et
- un étage de pilotage électropneumatique (30) pour faire varier la pression de pilotage, comportant un ensemble d'une ou plusieurs électrovannes (60, 62), apte à relier le volume de pilotage (42) alternativement à une source de pression (24) et à un orifice de vidange (58),
**caractérisé en ce que** l'étage de pilotage électropneumatique (30) comporte en outre une commande de déclenchement d'un palier initial de serrage, comportant un pressostat (74) relié au volume de pilotage (42), et un circuit logique (76) relié au pressostat (74) et à l'ensemble d'une ou plusieurs électrovannes (60, 62), et apte, en réponse à un ordre de desserrage, à générer à destination de l'ensemble d'une ou plusieurs électrovannes (60, 62) une commande électrique de vidange partielle du volume de pilotage (42) jusqu'à détection par le pressostat (74) du franchissement d'un seuil prédéterminé de pression, puis à réguler le volume de pilotage (42) au seuil prédéterminé de pression.

2. Robinet de mécanicien (22) selon la revendication 1, **caractérisé en ce que** la vanne pneumatique de relais (32) est apte à maintenir le volume d'échappement (38) isolé du volume d'admission (36) et de l'orifice de purge (40) lorsque la différence entre la pression de pilotage et la pression d'échappement est supérieure à un seuil positif donné de purge et inférieure à un seuil positif donné de remplissage.

3. Robinet de mécanicien (22) selon l'une quelconque des revendications précédentes, **caractérisé en ce que** l'ensemble d'une ou plusieurs électrovannes (60,62) a un état normalement ouvert reliant le volume de pilotage (42) à l'orifice de vidange (58) en l'absence d'alimentation électrique.

4. Robinet de mécanicien (22) selon l'une quelconque des revendications précédentes, **caractérisé en ce que** l'ensemble d'une ou plusieurs électrovannes comporte une électrovanne de vidange (60) apte à relier le volume de pilotage à l'orifice de vidange (58), de préférence par l'intermédiaire d'un étranglement (64).

5. Robinet de mécanicien (22) selon la revendication 4, **caractérisé en ce que** l'électrovanne de vidange (60) est une électrovanne en tout ou rien.

6. Robinet de mécanicien (22) selon la revendication 5, **caractérisé en ce que** l'électrovanne de vidange (60) est normalement ouverte dans une position reliant le volume de pilotage (42) à l'orifice de vidange (58) en l'absence d'alimentation électrique.

7. Robinet de mécanicien (22) selon l'une quelconque des revendications 3 à 6, **caractérisé en ce que** l'ensemble d'une ou plusieurs électrovannes (60, 62) comporte une électrovanne de remplissage (62) apte à relier la source de pression (24) au volume de pilotage (42), de préférence par l'intermédiaire d'un étranglement (68).

8. Robinet de mécanicien (22) selon la revendication 7, **caractérisé en ce que** l'électrovanne de remplissage (62) est une électrovanne en tout ou rien.

9. Robinet de mécanicien (22) selon la revendication 8, **caractérisé en ce que** l'électrovanne de remplissage (62) est normalement fermée dans une position isolant le volume de pilotage (42) de la source de pression (24) en l'absence d'alimentation électrique.

10. Robinet de mécanicien (22) selon l'une quelconque des revendications 4 à 6 en combinaison avec l'une quelconque des revendications 7 à 9, **caractérisé en ce que** l'électrovanne de vidange (60) est branchée en série entre l'électrovanne de remplissage (62) et le volume de pilotage (42), pour relier le volume de pilotage (42) alternativement à l'électrovanne de remplissage (62) ou à l'orifice de vidange (58).

11. Robinet de mécanicien (22) selon la revendication 10, **caractérisé en ce que** l'étage de pilotage électropneumatique (30) comporte en outre un circuit électrique de pilotage (70) apte d'une part, en réponse à un signal électrique de desserrage des freins, à positionner l'électrovanne de vidange (60) dans une position reliant le volume de pilotage (42) à l'électrovanne de remplissage (62) et à positionner l'électrovanne de remplissage (60) dans une position de remplissage reliant le volume de pilotage (42) à la source de pression (24) par l'intermédiaire de l'électrovanne de vidange (60) et d'autre part, en présence d'un signal électrique de serrage des freins, à positionner l'électrovanne de vidange (60) dans une position de vidange reliant le volume de pilotage (42) à l'orifice de vidange (58) et à positionner l'électrovanne de remplissage (62) dans une position isolant l'électrovanne de vidange (60) de la source de pression (24).

12. Robinet de mécanicien (22) selon l'une quelconque des revendications précédentes, **caractérisé en ce que** l'étage de pilotage électropneumatique (30) comporte une soupape de vidange (80) apte à vidanger le volume de pilotage (42) en présence d'une différence de pression supérieure à un seuil positif donné entre le volume de pilotage (42) et le volume d'échappement (38).

13. Robinet de mécanicien (22) selon l'une quelconque des revendications précédentes, **caractérisé en ce qu'**il comporte en outre un réservoir de pilotage (78) relié au volume de pilotage (42), et ayant une capacité de préférence inférieure à 10 litres, de préférence inférieure à 4 litres, et de préférence supérieure à 1 litre.

14. Robinet de mécanicien (22) selon l'une quelconque des revendications précédentes, **caractérisé en ce que** la vanne pneumatique de relais (32) est apte, en présence d'une différence positive suffisante entre une pression de pilotage régnant dans le volume de pilotage (42) et une pression d'échappement régnant dans le volume d'échappement (38), à ouvrir le passage entre le volume d'admission (36) et le volume d'échappement (38) avec une section de passage fonction de la pression de pilotage et de la pression d'échappement.

15. Circuit pneumatique de freinage d'une rame (10) d'un ou plusieurs véhicules ferroviaires (12), comportant une conduite d'alimentation (24) reliée à un générateur de pression (26), une conduite générale de frein (20) pour distribuer une pression à un ou plusieurs mécanismes de freins pneumatiques (18), **caractérisé en ce qu'**il comporte en outre un robinet de mécanicien (22) selon l'une quelconque des revendications précédentes.

## Patentansprüche

1. Lokomotivführerventil (22) zum Steuern eines pneumatischen Bremskreises einer Zuggarnitur (10) aus einem oder mehreren Schienenfahrzeugen (12), wobei der pneumatische Bremskreis eine Versorgungsleitung (24), eine Hauptbremsleitung (20) zum Verteilen von Druck auf einen oder mehrere pneumatische Bremsmechanismen (18) umfasst, wobei das Lokomotivführerventil (22) Folgendes umfasst:
- ein pneumatisches Relaisventil (32) mit einem Einlassvolumen (36), das dazu bestimmt ist, mit der Versorgungsleitung (24) verbunden zu werden, einem Auslassvolumen (38), das dazu bestimmt ist, mit der Hauptbremsleitung (20) verbunden zu werden, einer Entlüftungsöffnung (40) und einem Vorsteuervolumen (42), wobei das pneumatische Relaisventil (32) geeignet ist, bei Vorhandensein einer ausreichenden positiven Differenz zwischen einem Vorsteuerdruck, der in dem Vorsteuervolumen (42) herrscht, und einem Auslassdruck, der in dem Auslassvolumen (38) herrscht, einen Durchgang zwischen dem Einlassvolumen (36) und dem Auslassvolumen (38) zu öffnen, und einen Durchgang zwischen dem Auslassvolumen (38) und der Entlüftungsöffnung (40) zumindest dann zu öffnen, wenn im Vorsteuervolumen (42) atmosphärischer Druck vorliegt; und
- eine elektropneumatische Vorsteuerstufe (30) zur Veränderung des Vorsteuerdrucks, die eine Anordnung aus einem oder mehreren Magnetventilen (60, 62) umfasst, die geeignet ist, das Vorsteuervolumen (42) abwechselnd mit einer Druckquelle (24) und einer Ablassöffnung (58) zu verbinden,
**dadurch gekennzeichnet, dass** die elektropneumatische Vorsteuerstufe (30) ferner eine Steuerung zum Auslösen einer anfänglichen Anzugsstufe umfasst, die einen mit dem Vorsteuervolumen (42) verbundenen Druckschalter (74) und eine Logikschaltung (76) umfasst, die mit dem Druckschalter (74) und der Anordnung aus einem oder mehreren Magnetventilen (60, 62) verbunden ist, und geeignet ist, als Reaktion auf einen Lösebefehl für die Anordnung aus einem oder mehreren Magnetventilen (60, 62) einen elektrischen Befehl zu erzeugen, um das Vorsteuervolumen (42) teilweise abzulassen, bis der Druckschalter (74) feststellt, dass ein vorbestimmter Druckschwellenwert überschritten wurde, und dann das Vorsteuervolumen (42) auf den vorbestimmten Druckschwellenwert zu regeln.

2. Lokomotivführerventil (22) nach Anspruch 1, **dadurch gekennzeichnet, dass** das pneumatische Relaisventil (32) geeignet ist, um das Auslassvolumen (38) vom Einlassvolumen (36) und von der Entlüftungsöffnung (40) isoliert zu halten, wenn die Differenz zwischen dem Vorsteuerdruck und dem Auslassdruck größer als ein vorgegebener positiver Entlüftungsschwellenwert und kleiner als ein vorgegebener positiver Füllschwellenwert ist.

3. Lokomotivführerventil (22) nach einem der vorhergehenden Ansprüche, **dadurch gekennzeichnet, dass** die Anordnung aus einem oder mehreren Magnetventilen (60, 62) einen normalerweise offenen Zustand aufweist, der ohne Stromversorgung das Vorsteuervolumen (42) mit der Ablassöffnung (58) verbindet.

4. Lokomotivführerventil (22) nach einem der vorhergehenden Ansprüche, **dadurch gekennzeichnet, dass** die Anordnung aus einem oder mehreren Magnetventilen ein Ablassmagnetventil (60) umfasst, das geeignet ist, das Vorsteuervolumen mit der Ablassöffnung (58), vorzugsweise über eine Drossel (64), zu verbinden.

5. Lokomotivführerventil (22) nach Anspruch 4, **dadurch gekennzeichnet, dass** das Ablassmagnetventil (60) ein Ein-Aus-Magnetventil ist.

6. Lokomotivführerventil (22) nach Anspruch 5, **dadurch gekennzeichnet, dass** das Ablassmagnetventil (60) in einer Position, die das Vorsteuervolumen (42) mit der Ablassöffnung (58) verbindet, ohne Stromversorgung normalerweise offen ist.

7. Lokomotivführerventil (22) nach einem der Ansprüche 3 bis 6, **dadurch gekennzeichnet, dass** die Anordnung aus einem oder mehreren Magnetventilen (60, 62) ein Füllmagnetventil (62) umfasst, das geeignet ist, die Druckquelle (24) mit dem Vorsteuervolumen (42), vorzugsweise über eine Drossel (68), zu verbinden.

8. Lokomotivführerventil (22) nach Anspruch 7, **dadurch gekennzeichnet, dass** das Füllmagnetventil (62) ein Ein-Aus-Magnetventil ist.

9. Lokomotivführerventil (22) nach Anspruch 8, **dadurch gekennzeichnet, dass** das Füllmagnetventil (62) in einer Position, die das Vorsteuervolumen (42) von der Druckquelle (24) isoliert, ohne Stromversorgung normalerweise geschlossen ist.

10. Lokomotivführerventil (22) nach einem der Ansprüche 4 bis 6 in Kombination mit einem der Ansprüche 7 bis 9, **dadurch gekennzeichnet, dass** das Ablassmagnetventil (60) zwischen dem Füllmagnetventil (62) und dem Vorsteuervolumen (42) in Reihe geschaltet ist, um das Vorsteuervolumen (42) abwechselnd mit dem Füllmagnetventil (62) oder mit der Ablassöffnung (58) zu verbinden.

11. Lokomotivführerventil (22) nach Anspruch 10, **dadurch gekennzeichnet, dass** die elektropneumatische Vorsteuerstufe (30) ferner eine elektrische Vorsteuerschaltung (70) umfasst, die geeignet ist, als Reaktion auf ein elektrisches Bremslösesignal das Ablassmagnetventil (60) in einer Position zu positionieren, die das Vorsteuervolumen (42) mit dem Füllmagnetventil (62) verbindet, und das Füllmagnetventil (60) in einer Füllposition zu positionieren, die das Vorsteuervolumen (42) über das Ablassmagnetventil (60) mit der Druckquelle (24) verbindet, und bei Vorhandensein eines elektrischen Bremsbetätigungssignals das Ablassmagnetventil (60) in eine Ablassposition zu bringen, die das Vorsteuervolumen (42) mit der Ablassöffnung (58) verbindet, und das Füllmagnetventil (62) in eine Position zu bringen, die das Ablassmagnetventil (60) von der Druckquelle (24) isoliert.

12. Lokomotivführerventil (22) nach einem der vorhergehenden Ansprüche, **dadurch gekennzeichnet, dass** die elektropneumatische Vorsteuerstufe (30) ein Ablassventil (80) umfasst, das geeignet ist, das Vorsteuervolumen (42) bei Vorhandensein einer Druckdifferenz, die größer als ein vorgegebener positiver Schwellenwert ist, zwischen dem Vorsteuervolumen (42) und dem Auslassvolumen (38) abzulassen.

13. Lokomotivführerventil (22) nach einem der vorhergehenden Ansprüche, **dadurch gekennzeichnet, dass** es ferner einen Vorsteuertank (78) umfasst, der mit dem Vorsteuervolumen (42) verbunden ist und ein Fassungsvermögen von vorzugsweise weniger als 10 Liter, vorzugsweise weniger als 4 Liter und vorzugsweise mehr als 1 Liter aufweist.

14. Lokomotivführerventil (22) nach einem der vorhergehenden Ansprüche, **dadurch gekennzeichnet, dass** das pneumatische Relaisventil (32) dazu eingerichtet ist, bei Vorhandensein einer ausreichenden positiven Differenz zwischen einem im Vorsteuervolumen (42) herrschenden Vorsteuerdruck und einem im Auslassvolumen (38) herrschenden Auslassdruck den Durchlass zwischen dem Einlassvolumen (36) und dem Auslassvolumen (38) mit einem vom Vorsteuerdruck und vom Auslassdruck abhängigen Durchlassquerschnitt zu öffnen.

15. Pneumatischer Bremskreis für eine Zuggarnitur (10) aus einem oder mehreren Schienenfahrzeugen (12), mit einer Versorgungsleitung (24), die mit einem Druckerzeuger (26) verbunden ist, einer Hauptbremsleitung (20) zum Verteilen von Druck auf einen oder mehrere pneumatische Bremsmechanismen (18), **dadurch gekennzeichnet, dass** er ferner ein Lokomotivführerventil (22) nach einem der vorstehenden Ansprüche umfasst.

## Claims

1. Automatic brake valve (22) to control a pneumatic brake circuit of a draft (10) of one or a plurality of rail vehicles (12), the pneumatic brake circuit comprising a feed line (24), a general brake line (20) to distribute a pressure to one or a plurality of pneumatic brake mechanisms (18), the automatic brake valve (22) comprising:
- a pneumatic relay valve (32) comprising an intake volume (36) intended to be connected to the feed line (24), an exhaust volume (38) intended to be connected to the general brake line (20), a bleeder hole (40) and a regulation volume (42), the pneumatic relay valve (32) being capable, when there is a sufficient positive difference between a regulation pressure prevailing in the regulation volume (42) and an exhaust pressure prevailing in the exhaust volume (38), of opening a passage between the intake volume (36) and the exhaust volume (38), and being capable of opening a passage between the exhaust volume (38) and the bleeder hole (40) at least when the regulation volume (42) is at atmospheric pressure; and
- an electro pneumatic regulation stage (30) to vary the regulation pressure, comprising a set of one or a plurality of solenoid valves (60, 62), capable of alternately linking the regulation volume (42) to a source of pressure (24) and to a drain hole (58),
**characterized in that** the electro pneumatic regulation stage (30) further comprises a command for triggering an initial clamping bearing, comprising a pressure switch (74) linked to the regulation volume (42), and a logic circuit (76) linked to the pressure switch (74) and to the set of one or a plurality of solenoid valves (60, 62), and capable, in response to an unclamping order, of generating an electric command intended for the set of one or a plurality of solenoid valves (60, 62) for partial drainage of the regulation volume (42) until detection by the pressure switch (74) of the crossing of a predetermined pressure threshold, and of then regulating the regulation volume (42) to the predetermined pressure threshold.

2. Automatic brake valve (22) according to claim 1, **characterized in that** the pneumatic relay valve (32) is capable of maintaining the exhaust volume (38) isolated from the intake volume (36) and from the bleeder hole (40) when the difference between the regulation pressure and the exhaust pressure is greater than a given positive bleeding threshold and less than a given positive filling threshold.

3. Automatic brake valve (22) according to any of the preceding claims, **characterized in that** the set of one or a plurality of solenoid valves (60, 62) has a normally open state linking the regulation volume (42) to the drain hole (58) when no electricity is being supplied.

4. Automatic brake valve (22) according to any of the preceding claims, **characterized in that** the set of one or a plurality of solenoid valves comprises a drainage solenoid valve (60), capable of linking the regulation volume to the drain hole (58), preferably by means of a constriction (64).

5. Automatic brake valve (22) according to claim 4, **characterized in that** the drainage solenoid valve (60) is an on/off solenoid valve.

6. Automatic brake valve (22) according to claim 5, **characterized in that** the drainage solenoid valve (60) is normally open in a position linking the regulation volume (42) to the drain hole (58) when no electricity is being supplied.

7. Automatic brake valve (22) according to any of claims 3 to 6, **characterized in that** the set of one or a plurality of solenoid valves (60, 62) comprises a filling solenoid valve (62) capable of linking the source of pressure (24) to the regulation volume (42), preferably by means of a constriction (68).

8. Automatic brake valve (22) according to claim 7, **characterized in that** the filling solenoid valve (62) is an on/off solenoid valve.

9. Automatic brake valve (22) according to claim 8, **characterized in that** the filling solenoid valve (62) is normally closed in a position isolating the regulation volume (42) from the source of pressure (24) when no electricity is being supplied.

10. Automatic brake valve (22) according to any of claims 4 to 6 in combination with any of claims 7 to 9, **characterized in that** the drainage solenoid valve (60) is connected in series between the filling solenoid valve (62) and the regulation volume (42), to alternately link the regulation volume (42) to the filling solenoid valve (62) or to the drain hole (58).

11. Automatic brake valve (22) according to claim 10, **characterized in that** the electro pneumatic regulation stage (30) further comprises an electric regulation circuit (70) capable on the one hand, in response to an electric brake unclamping signal, of positioning the drainage solenoid valve (60) in a position linking the regulation volume (42) to the filling solenoid valve (62) and of positioning the filling solenoid valve (60) in a filling position linking the regulation volume (42) to the source of pressure (24) by means of the drainage solenoid valve (60) and, on the other hand, in the presence of an electric brake clamping signal, of positioning the drainage solenoid valve (60) in a drainage position linking the regulation volume (42) to the drain hole (58) and of positioning the filling solenoid valve (62) in a position isolating the drainage solenoid valve (60) from the source of pressure (24).

12. Automatic brake valve (22) according to any of the preceding claims, **characterized in that** the electro pneumatic regulation stage (30) comprises a drainage valve (80) capable of draining the regulation volume (42) in the presence of a pressure difference greater than a given positive threshold between the regulation volume (42) and the exhaust volume (38).

13. Automatic brake valve (22) according to any of the preceding claims, **characterized in that** it further comprises a regulation reservoir (78) linked to the regulation volume (42) and preferably having a capacity of less than 10 liters, preferably of less than 4 liters, and preferably of greater than 1 liter.

14. Automatic brake valve (22) according to any of the preceding claims, **characterized in that** the pneumatic relay valve (32) is capable, in the presence of a sufficient positive difference between a regulation pressure prevailing in the regulation volume (42) and an exhaust pressure prevailing in the exhaust volume (38), of opening the passage between the intake volume (36) and the exhaust volume (38) with a passage section that is a function of the regulation pressure and of the exhaust pressure.

15. Pneumatic brake circuit of a draft (10) of one or a plurality of rail vehicles (12), comprising a feed line (24) linked to a pressure generator (26), a general brake line (20) to distribute a pressure to one or a plurality of pneumatic brake mechanisms (18), **characterized in that** it further comprises an automatic brake valve (22) according to any of the preceding claims.
